# EUROPÄISCHE PATENTANMELDUNG

(11) **EP 4 180 265 A1**
(43) Veröffentlichungstag der Anmeldung: **17.05.2023**
(21) Anmeldenummer: 21208264.8
(22) Anmeldetag: 15.11.2021
(51) Int. Cl.: B60L 53/16, B60L 53/18

(54) **LADEKABEL FÜR FAHRZEUGE MIT EINEM ELEKTROANTRIEB**

(71) Anmelder: Lapp Engineering AG, 6330 Cham (CH)
(72) Erfinder: Weinbrecht, Andreas, 6330 Cham (CH); Renfordt, Jannik, 6330 Cham (CH)
(74) Vertreter: Rutz & Partner

(57) **Zusammenfassung**

Das Ladekabel (10) umfasst eine elektrische Leitung (19), die mehrere von einem Leitungsmantel (190) umschlossene elektrische Leiter (191, 192) aufweist, die an einem Ende mit ersten Anschlusskontakten (15A) eines ersten Steckverbinders (1A) und am anderen Ende mit zweiten Anschlusskontakten (15B) eines zweiten Steckverbinders (1B) verbunden sind, wobei der erste Steckverbinder (1A) ein Gehäuse (11) und einen von diesem Gehäuse (11) gehaltenen ersten Kontaktkragen (16A), in dem die ersten Anschlusskontakte (15A) gelagert sind, umfasst und der zweite Steckverbinder (1B) ein Gehäuse (11) und einen von diesem Gehäuse (11) gehaltenen zweiten Kontaktkragen (16B), in dem die zweiten Anschlusskontakte (15B) gelagert sind, umfasst. Erfindungsgemäss ist vorgesehen, dass das Gehäuse (11) des ersten Steckverbinders (1A) und das Gehäuse (11) des zweiten Steckverbinders (1B) identisch ausgebildet sind und eine erste Gehäuseschale (111) und eine zweite Gehäuseschale (112) aufweisen, die miteinander verbunden sind und zusammen ein Gehäuseanschlussteil (119) mit einer Aufnahmeöffnung (110) bilden, und dass der erste und der zweite Kontaktkragen (16A, 16B) je ein Kragenanschlussteil (169) aufweisen, das vom Gehäuseanschlussteil (119) des zugehörigen Gehäuses (11) in der Aufnahmeöffnung (110) gehalten.

## Beschreibung

Die vorliegende Erfindung betrifft ein Ladekabel für Fahrzeuge mit einem Elektroantrieb.

Fahrzeuge mit einem Elektroantrieb, gegebenenfalls Hybridfahrzeuge, werden an Ladestationen geladen, die mit einem Ladekabel versehen ist, welches typischerweise an einem Ende mit der Ladestation verbunden und am anderen Ende mit einem Steckverbinder versehen ist. Ferner sind Ladekabel bekannt, die beidseits mit einem Steckverbinder versehen sind.

Die DE102014224119A1 offenbart ein Ladekabel für Fahrzeuge mit einem Elektroantrieb sowie ein Ladesystem mit einem solchen Ladekabel. Das Ladekabel umfasst zur Übertragung eines Ladestroms elektrische Leiter, die von einem Leitungsmantel umschlossen sind und die endseitig mit einem Steckverbinder verbunden sind, der mit einem Steckverbinder eines Fahrzeugs verbindbar ist. Auf der Seite der Ladestation ist das Ladekabel in diese hinein geführt und fest verdrahtet. Alternativ kann das Ladekabel auch an dem der Ladestation zugewandten Ende mit einem Steckverbinder versehen sein. Die Steckverbinder des Ladekabels, Stecker oder Kupplungen, sind jeweils an den Steckverbinder des Fahrzeugs und, sofern vorhanden, den Steckverbinder der Ladestation angepasst.

Ladekabel dieser Art sind geeignet, hohe Ladeströme zu leiten, weshalb hochwertige Steckverbinder mit Anschlusskontakten verwendet werden, mittels denen elektrische Verbindungen ohne relevanten Übergangswiderstand herstellbar sind. Dadurch werden Verluste bei der Übertragung der elektrischen Energie und eine dadurch verursachte Erwärmung der Steckverbinder vermieden, die zu einer Beschädigung des Fahrzeugs oder der Ladestation führen könnte.

Aufgrund der Verwendung hochwertiger Steckverbinder, die zudem eine hohe Anzahl unterschiedlicher Bauteile aufweisen, resultieren bei der Fertigung des Ladekabels entsprechend hohe Kosten. Eine Reduktion der Herstellungskosten durch Verwendung kostengünstigerer Materialien führt in der Regel zu einer Qualitätseinbusse, die nicht toleriert wird.

Die Kosten des Ladekabels sind insbesondere dann relativ hoch, wenn dieses zur Verbindung mit einem Fahrzeug mit einem ersten Steckverbinder und zur Verbindung mit einer Ladestation mit einem zweiten Steckverbinder versehen ist.

Der vorliegenden Erfindung liegt daher die Aufgabe zugrunde, ein verbessertes Ladekabel zu schaffen, welches zur Verbindung mit einem Fahrzeug mit einem ersten Steckverbinder und zur Verbindung mit einer Ladestation mit einem zweiten Steckverbinder versehen ist.

Insbesondere soll ein verbessertes Ladekabel mit reduzierten Herstellungskosten geschaffen werden, ohne dass eine Qualitätseinbusse resultiert.

Das Ladekabel soll derart aufgebaut sein, dass sich der Herstellungsaufwand wesentlich reduziert.

Das Ladekabel soll alle technischen Anforderungen, die gegebenenfalls in Normen spezifiziert sind, zuverlässig erfüllen.

Die Steckverbinder sollen in einfacher Weise und mit geringem Aufwand zuverlässig gegen eindringendes Wasser geschützt und somit dicht abgeschlossen sein. Auf aufwändige Dichtungsmassnahmen soll verzichtet werden können.

Das Ladekabel soll mit geringem Aufwand entsprechend den Anforderungen des Anwenders konfiguriert werden können.

Das Ladekabel und die Steckverbinder sollen zudem auch zu einem späteren Zeitpunkt nach Inbetriebnahme mit geringem Aufwand neu konfiguriert und gegebenenfalls repariert werden können.

Das Ladekabel soll zudem in einfacher Weise gegen Fehlmanipulation und Überhitzung gesichert werden können.

Diese Aufgabe wird mit einem Ladekabel gelöst, der die in Anspruch 1 angegebenen Merkmale aufweist. Vorteilhafte Ausgestaltungen der Erfindung sind in weiteren Ansprüchen angegeben.

Das Ladekabel umfasst eine elektrische Leitung, die mehrere von einem Leitungsmantel umschlossene elektrische Leiter aufweist, die an einem Ende mit ersten Anschlusskontakten eines ersten Steckverbinders und am anderen Ende mit zweiten Anschlusskontakten eines zweiten Steckverbinders verbunden sind, wobei der erste Steckverbinder ein Gehäuse und einen von diesem Gehäuse gehaltenen ersten Kontaktkragen, in dem die ersten Anschlusskontakte gelagert sind, umfasst und der zweite Steckverbinder ein Gehäuse und einen von diesem Gehäuse gehaltenen zweiten Kontaktkragen, in dem die zweiten Anschlusskontakte gelagert sind, umfasst.

Erfindungsgemäss ist vorgesehen, dass das Gehäuse des ersten Steckverbinders und das Gehäuse des zweiten Steckverbinders identisch ausgebildet sind und eine erste Gehäuseschale und eine zweite Gehäuseschale aufweisen, die vorzugsweise lösbar miteinander verbunden sind und zusammen ein Gehäuseanschlussteil mit einer Aufnahmeöffnung bilden, und dass der erste und der zweite Kontaktkragen je ein Kragenanschlussteil aufweisen, das vom Gehäuseanschlussteil des zugehörigen Gehäuses in der Aufnahmeöffnung gehalten ist.

Vorzugsweise sind das Kragenanschlussteil des ersten Kontaktkragens und das Kragenanschlussteil des zweiten Kontaktkragens identisch ausgebildet. Wesentlich ist hingegen, dass die Verbindung der Kragenanschlussteile mit dem Gehäuse gewährleistet ist, weshalb die Kragenanschlussteile funktionsgleich aber nicht zwingend identisch sein müssen.

Die Steckverbinder des erfindungsgemässen Ladekabels weisen in allen Ausgestaltungen nur wenige unterschiedliche Bauteile auf, weshalb sich der Herstellungsaufwand des Ladekabels wesentlich reduziert. Auf die Konstruktion einer Vielzahl unterschiedlicher Bauteile kann verzichtet werden. Die nur wenigen Bauteile der Steckverbinder können mit höherer, gegebenenfalls doppelter Stückzahl gefertigt werden, weshalb sich die Fertigungskosten weiter reduzieren.

Eine erste wesentliche Kostenreduktion ergibt sich durch die Verwendung identischer Gehäuse für alle eingesetzten Steckverbinder, Steckerkupplungen und Stecker. Auch die Kontaktkragen können kostengünstiger gefertigt werden, da sie mit identischen Kragenanschlussteilen versehen sind.

Weiterhin können entsprechend den Anforderungen an das Ladekabel mit relativ geringem Aufwand unterschiedliche Kontaktkragen bereitgestellt werden, die jeweils funktionsgleiche oder identische Kragenanschlussteile aufweisen. Die Steckverbinder können daher mit geringem Aufwand bedarfsweise konfiguriert werden. Der erste und der zweite Steckverbinder können wahlweise als Steckerkupplung oder Stecker ausgebildet sein. Weiterhin können Steckverbinder mit unterschiedlichen Kontaktkonfigurationen mit funktionsgleichen oder identischen Kragenanschlussteilen bereitgestellt werden.

Das Kragenanschlussteil des ersten und des zweiten Kontaktkragens umfasst vorzugsweise eine Anschlusshülse, die in die Aufnahmeöffnung des Gehäuseanschlussteils hinein geführt ist und die an der Aussenseite wenigstens ein Kopplungsteil, wie eine Kopplungsrippe oder eine Kopplungsnut, aufweist, die nach dem Verbinden der ersten und der zweiten Gehäuseschale mit einem Kopplungsteil des Gehäuseanschlussteils, wie einer Kopplungsnut oder einer Kopplungsrippe, formschlüssig zusammenwirkt. Die Verbindung zwischen dem Gehäuse und dem zugehörigen Kontaktkragen resultiert daher automatisch bei der Verbindung der beiden Gehäuseschalen, die beispielsweise durch Schrauben oder Rastelemente miteinander verbunden werden.

In einer weiteren vorzugsweisen Ausgestaltung ist vorgesehen, dass der erste Steckverbinder und der zweite Steckverbinder je ein Knickschutzelement aufweisen, die identisch ausgebildet sind und die je an dem dem Gehäuseanschlussteil gegenüberliegenden Ende des zugehörigen Gehäuses von Halteteilen des Gehäuses, die mit einem Verbindungsteil des Knickschutzelements formschlüssig zusammenwirken, gehalten sind. Durch die Verwendung identischer Knickschutzelemente für die beiden Steckverbinder resultiert eine weitere Reduktion des Herstellungsaufwandes für das erfindungsgemässe Ladekabel.

In einer weiteren vorzugsweisen Ausgestaltung ist vorgesehen, dass der erste Steckverbinder und der zweite Steckverbinder je eine vorzugsweise aus Kunststoff gefertigte Tülle aufweisen, die identisch ausgebildet sind.

Die Tülle weist vorzugsweise die Form einer Glocke auf und umfasst einen Tüllenmantel, der die aus dem Leitungsmantel herausgeführten elektrischen Leiter umschliesst und an den auf einer Seite ein Dichtungskragen anschliesst, der den Leitungsmantel vorzugsweise dicht abschliessend umschliesst, und an den auf der anderen Seite ein Verbindungskragen anschliesst, der die Anschlusshülse des zugehörigen ersten oder zweiten Anschlusskragens vorzugsweise dicht abschliessend umschliesst. Die Tülle ist vorzugsweise dehnbar, so dass sie an die Position des Endstücks des Leitungsmantels angepasst werden kann. Dazu weist der Tüllenmantel vorzugsweise einen gewellten Bereich oder Mantelbalg auf.

Durch die Tülle werden die freigelegten elektrischen Leiter und die Anschlusskontakte im Bereich zwischen dem Leitungsmantel und dem zugehörigen Kontaktkragen dicht einschlossen und gegen in einfacher Weise gegen eindringendes Wasser geschützt. Auf andere oder weitere aufwändige Dichtungsmassnahmen beispielsweise mittels Spritzgusstechnik kann verzichtet werden.

In einer vorzugsweisen Ausgestaltung sind die Anschlusshülse des zugehörigen ersten oder zweiten Anschlusskragens und der Verbindungskragen der Tülle durch Kopplungselemente, wie Kopplungsnocken und Kopplungsöffnungen miteinander gekoppelt. Der Verbindungskragen der Tülle bleibt daher zuverlässig in Position gehalten, wenn die Gehäuseschalen miteinander verbunden werden. Vorzugsweise ist vorgesehen, dass der Verbindungskragen bei diesem Verbindungsvorgang durch die Halteteile des Gehäuses oder durch weitere Elemente des Gehäuses dicht abschliessend gegen die Anschlusshülse des zugehörigen ersten oder zweiten Kontaktkragens gedrückt wird und eine dichte Verbindung zwischen der Anschlusshülse und dem Verbindungskragen der Tülle resultiert.

Durch die Verwendung identischer Tüllen für beide Steckverbinder des Ladekabels resultiert wiederum ein reduzierter Herstellungsaufwand.

Vorzugsweise umfassen der erste Steckverbinder und der zweite Steckverbinder je eine vorzugsweise aus Kunststoff gefertigte Halteplatte, die identisch ausgebildet sind und Haltekragen aufweisen, in die je einer der ersten oder zweiten Anschlusskontakte eingesetzt ist. Durch die identische Ausgestaltung der Halteplatten reduziert sich wiederum der Herstellungsaufwand des Ladekabels.

In einer weiteren bevorzugten Ausgestaltung ist vorgesehen, dass zwei der Anschlusskontakte des ersten Steckverbinders und/oder dass zwei der Anschlusskontakte des zweiten Steckverbinders je mit einem der Temperaturmessung dienenden Messfühler, wie einem Messwiderstand, verbunden sind. Durch Überwachung der betreffenden Anschlusskontakte bzw. des Messfühlers kann eine Erwärmung und gegebenenfalls eine fehlerhafte Kontaktierung des betreffenden Steckverbinders ermittelt und unverzüglich korrigiert werden. Beispielsweise wird der Ladevorgang unterbrochen, falls ein Parameter des Messfühlers einen Schwellenwert überschreitet oder unterschreitet.

In einer vorzugsweisen Ausgestaltung ist der Messfühler mit einer ersten Anschlussleitung mit einem freien Anschlusskontakt und mit einer zweiten Anschlussleitung mit einem Anschlusskontakt verbunden, an den einer der elektrischen Leiter angeschlossen ist. Der betreffende Anschlusskontakt kann daher einerseits zur Übertragung des Ladestroms und andererseits zur Überwachung des Messfühlers verwendet werden.

In einer weiteren bevorzugten Ausgestaltung ist vorgesehen, dass wenigstens zwei der Anschlusskontakte der Führung eines Ladestroms dienende Leistungskontakte sind und wenigstens einer der Anschlusskontakte ein gegebenenfalls kleiner dimensionierter Messkontakt ist. Wenigstens zwei der elektrischen Leiter dienen der Führung des Ladestroms. Vorzugsweise ist zusätzlich wenigstens ein elektrischer Leiter vorgesehen, der als Messleitung oder Steuerleitung dient.

Die beiden Gehäuseschalen sind vorzugsweise je einstückig mit einem Klemmelement verbunden, mittels denen der Leitungsmantel der elektrischen Leitung erfasst und fixiert wird. Dadurch wird in einfacher Weise eine Zugentlastung realisiert.

Vorzugsweise sind der erste Steckverbinder und/oder der zweite Steckverbinder des Ladekabels durch eine Abdeckkappe abgedeckt oder abdeckbar, die vorzugsweise durch eine Verbindungsschleife mit der elektrischen Leitung verbunden ist.

Nachfolgend wird die Erfindung anhand von Zeichnungen näher erläutert. Dabei zeigt:
- Fig. 1a: ein erfindungsgemässes Ladekabel 10 mit einer elektrischen Leitung 19, die an einem Ende mit einem ersten Steckverbinder 1A in der Ausgestaltung einer Steckerkupplung und am anderen Ende mit einem zweiten Steckverbinder 1B in der Ausgestaltung eines Steckers verbunden ist;
- Fig. 1b: das Ladekabel 10 von Fig. 1a von der anderen Seite;
- Fig. 2a: das Ladekabel 10 von Fig. 1a in Explosionsdarstellung;
- Fig. 2b: ein vereinfachtes elektrisches Schaltbild des Ladekabels von Fig. 2a;
- Fig. 3a: in Explosionsdarstellung den als Steckerkupplung ausgebildeten ersten Steckverbinder 1A von Fig. 1a mit einem Gehäuse 11, das eine erste und eine zweite Gehäuseschale 111, 112 aufweist und das formschlüssig mit einem Kontaktkragen bzw. Kupplungskragen 16A verbindbar ist, in dem Kupplungskontakte 151A, 152A gehalten sind;
- Fig. 3b: in Explosionsdarstellung den als Stecker ausgebildeten zweiten Steckverbinder 1B von Fig. 1a mit einem Gehäuse 11, das eine erste und eine zweite Gehäuseschale 111, 112 aufweist und das formschlüssig mit einem Kontaktkragen bzw. Steckerkragen 16B verbindbar ist, in dem Steckerkontakte 151B, 152B gehalten sind;
- Fig. 4a: von der Seite, das Gehäuse 11 von Fig. 3a oder Fig. 3b sowie den Kupplungskragen 16A von Fig. 3a und den Steckerkragen 16B von Fig. 3b;
- Fig. 4b: in räumlicher Darstellung, das Gehäuse 11 von Fig. 3a oder Fig. 3b sowie den Kupplungskragen 16A von Fig. 3a und den Steckerkragen 16B von Fig. 3b;
- Fig. 4c: von der Frontseite, das Gehäuse 11 von Fig. 3a oder Fig. 3b sowie den Kupplungskragen 16A von Fig. 3a und den Steckerkragen 16B von Fig. 3b;
- Fig. 5a: den ersten Steckverbinder 1A von Fig. 1a in einer Schnittdarstellung; und
- Fig. 5b: den zweiten Steckverbinder 1B von Fig. 1a in einer Schnittdarstellung.

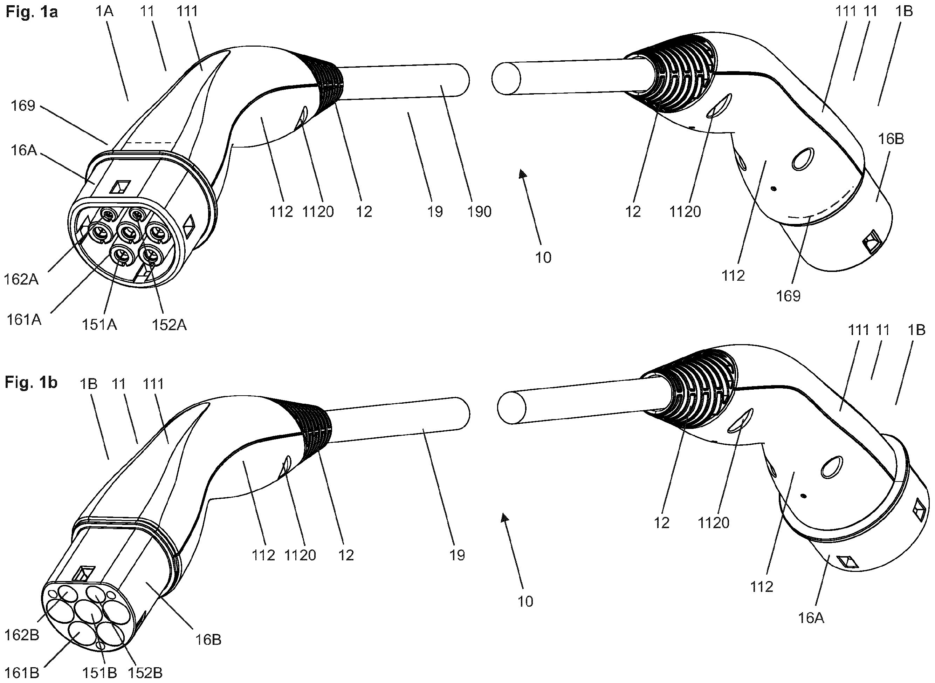

Fig. 1a zeigt ein erfindungsgemässes Ladekabel 10 mit einem als Steckerkupplung ausgebildeten ersten Steckverbinder 1A und mit einem als Stecker ausgebildeten zweiten Steckverbinder 1B, die je an einem geordneten Ende einer elektrischen Leitung 19 montiert sind.

Die Steckverbinder 1A und 1B weisen identische Gehäuse 11 auf, die eine obere erste Gehäuseschale 111 und eine untere zweite Gehäuseschale 112 umfassen. Die beiden Gehäuseschalen 111, 112 sind vorzugsweise durch Schrauben miteinander verbunden, die in Montageöffnungen 1120 der zweiten Gehäuseschale 112 eingeführt und in Gewindeelemente der ersten Gehäuseschale 111 eingedreht wurden.

Die Gehäuse 11 der beiden Steckverbinder 1A und 1B halten an der Rückseite je ein elastisches Knickschutzelement 12. Die Knickschutzelemente 12 sind identisch ausgebildet und vorzugsweise aus Kunststoff gefertigt.

An der Frontseite halten die Gehäuse 11 der beiden Steckverbinder 1A und 1B einen ersten und einen zweiten Kontaktkragen 16A, 16B, die unterschiedlich ausgebildet sind. Die Kontaktkragen 16A, 16B weisen hingen funktionsgleiche oder identische Kragenanschlussteile 169 auf, die an der Frontseite des zugehörigen Gehäuses 11 gehalten sind.

Der erste Kontaktkragen 16A umfasst Kupplungskontakte 151A, 152A unterschiedlicher Grösse, die in röhrenförmigen Kupplungskanälen 161A, 162A entsprechender Grösse gelagert und gehalten sind. Der zweite Kontaktkragen 16B umfasst Steckerkontakte 151B, 152B, die in Steckerkanälen 161B, 162B entsprechender Grösse gelagert und gehalten sind.

Fig. 1b zeigt das Ladekabel 10 von Fig. 1a von der anderen Seite mit Blick auf die Frontseite des zweiten Steckverbinders 1B und auf die Rückseite des ersten Steckverbinders 1A.

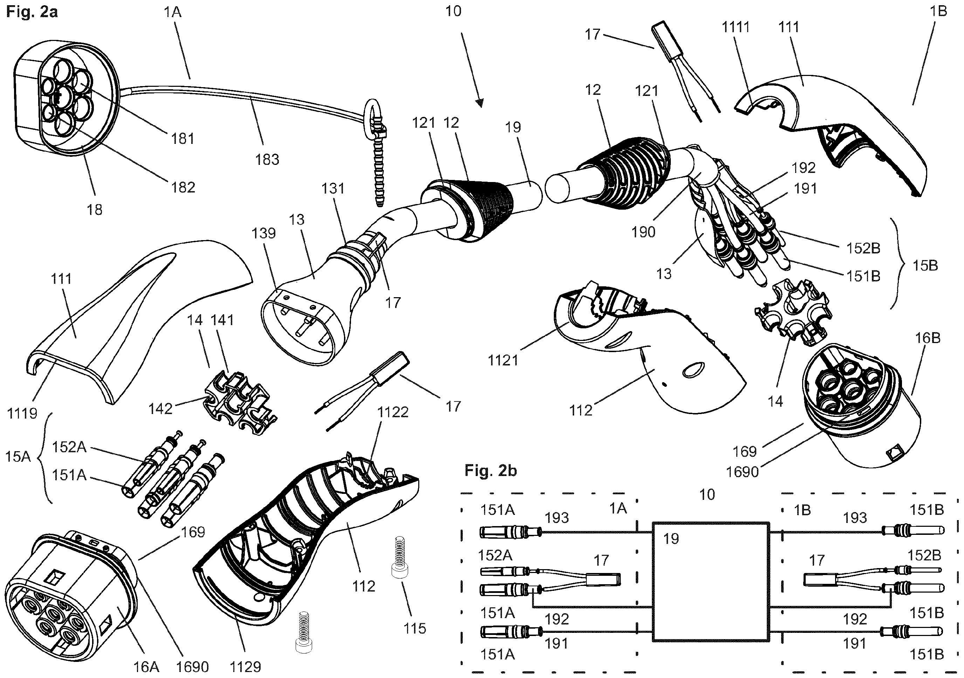

Fig. 2a zeigt das Ladekabel 10 von Fig. 1a in Explosionsdarstellung.

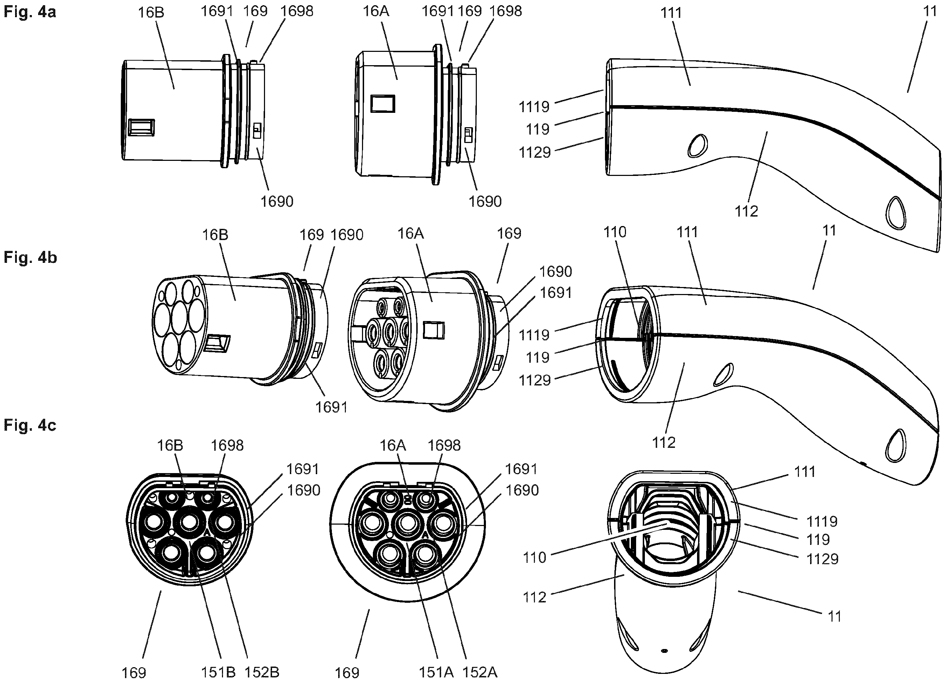

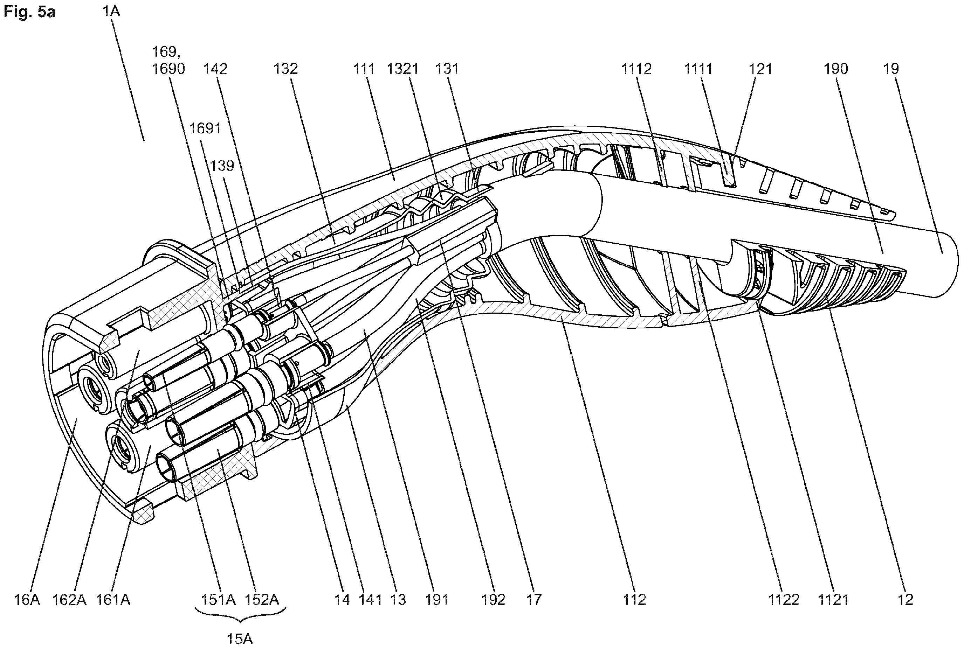

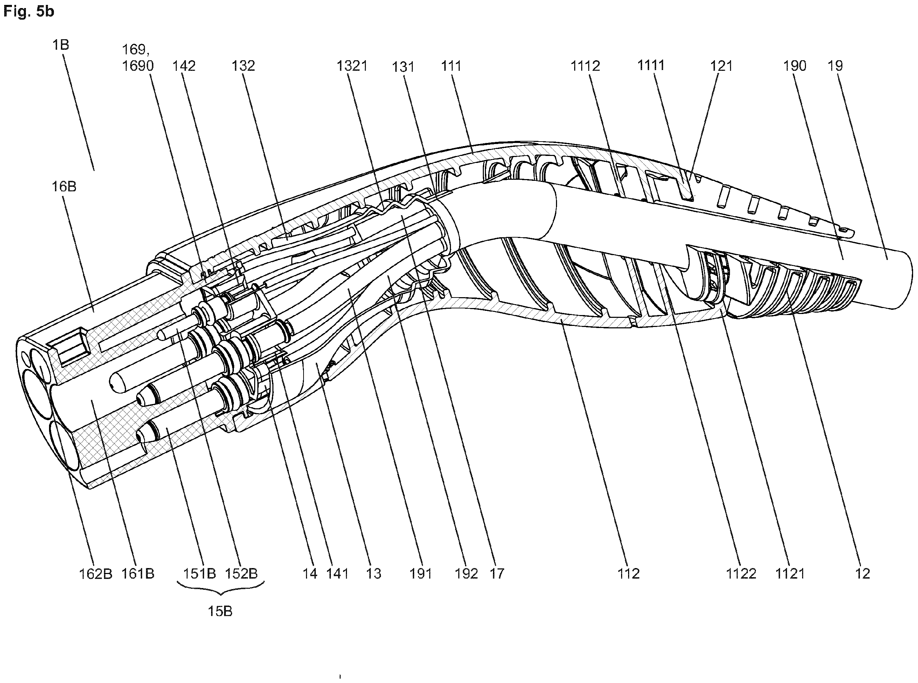

Die Kupplungskontakte 15A, 151A, 152A und die Steckerkontakte 15B, 151B, 152B wurden aus den Kontaktkragen 16A, 16B gelöst. Die Kontaktkragen 16A, 16B weisen auf der dem Gehäuse 11 zugewandten Seite funktionsgleich oder identisch ausgebildete Kragenanschlussteile 169 mit einer Anschlusshülse 1690 auf. Die Anschlusshülse 1690 wird nach der Montage von den miteinander verbundenen Gehäuseschalen 111, 112 umschlossen und mittels Kopplungsteilen 1119, 1129, die frontseitig an den Gehäuseschalen 111, 112 angeformt sind, gehalten. Durch die Verbindung der beiden Gehäuseschalen 111, 112 wird das Gehäuse 11 und frontseitig ein Gehäuseanschlussteil 119 mit einer Aufnahmeöffnung 110 gebildet, in der das Kragenanschlussteil 169 des zugehörigen Kontaktkragens 16A; 16B gehalten wird (siehe z.B. Fig. 4b sowie Fig. 5a und Fig. 5b).

Die beiden Steckverbinder 1A, 1B können daher mit demselben Gehäuse 11 verbunden werden, indem die Gehäuseschalen 111, 112 gegeneinander geführt und miteinander verbunden, beispielsweise mittels Schrauben 115 miteinander verschraubt werden.

Die elektrische Leitung 19 des Ladekabels 10 umfasst mehrere von einem Leitungsmantel 190 umschlossene elektrische Leiter 191, 192, die an einem Ende mit den Kupplungskontakten 15A des ersten Steckverbinders 1A und am anderen Ende mit den Steckerkontakten 15B des zweiten Steckverbinders 1B verbindbar bzw. verbunden sind.

Der erste Steckverbinder 1A weist fünf grössere Kupplungskontakte 151A und zwei kleinere Kupplungskontakte 152A auf, die vor der Montage in grössere oder kleinere Haltekragen 141, 142 einer Halteplatte 14 eingesetzt werden.

Der zweite Steckverbinder 1B weist fünf grössere Steckerkontakte 151B und zwei kleinere Steckerkontakte 152B auf, die vor der Montage in grössere oder kleinere Haltekragen 141, 142 einer Halteplatte 14 eingesetzt werden.

Die mit den Anschlusskontakten 15A bzw. 15B bestückten Halteplatten 14 können in die Anschlusshülse 1690 des zugehörigen Kontaktkragens 16A oder 16B eingesetzt werden und sind dort vorzugsweise spielfrei gehalten.

Die Halteplatten 14 der beiden Steckverbinder 1A, 1B sind identisch ausgebildet und können daher kostengünstig gefertigt werden.

Die grösseren Kupplungskontakte 151A und Steckerkontakte 151B sind vorzugsweise Leistungskontakte, die durch elektrische Leiter 191 miteinander verbunden sind, über die ein Ladestrom geführt werden kann. Die kleineren Kupplungskontakte 152A und Steckerkontakte 152B sind vorzugsweise Messkontakte, die beispielsweise durch Messleitungen oder Steuerleitung miteinander verbunden sind.

Wie dies in Fig. 2b illustriert ist, wird in einer vorzugsweisen Ausgestaltung des Ladekabels 10 vorzugsweise in jedem Steckverbinder 1A, 1B ein Messfühler 17, z.B. ein Messwiderstand, vorgesehen, mittels dessen die Temperatur ermittelt werden kann. Eine erste Leitung des Messfühlers 17 ist mit einem Messkontakt 152A bzw. 152B verbunden und eine zweite Leitung des Messfühlers 17 ist in dieser vorzugsweisen Ausgestaltung mit einem Leistungskontakt 151A bzw. 151B verbunden.

Die beiden identischen Knickschutzelemente 1 sind konisch ausgebildet und weisen auf der dem Gehäuse 11 zugewandten Seite ein ringförmiges und durch eine Ringnut abgesetztes Verbindungsteil 121 auf. Das Verbindungsteil 121 wird nach der Montage von Halteteilen 1111, 1121, die an der Rückseite der Gehäuseschalen 111, 112 vorgesehen sind und die nach dem Zusammenfügen der Gehäuseschalen 111, 112 einen Ringflansch bilden, gehalten. Nach dem Zusammenfügen der Gehäuseschalen 111, 112 greifen die Halteteile 1111, 1121 in die Ringnut des Verbindungsteils 121 ein.

Die beiden Steckverbinder 1A, 1B weisen zudem je eine vorzugsweise aus Kunststoff gefertigte Tülle 13 auf, die identisch ausgebildet sind.

Die Tülle 13 jedes Steckverbinders 1A, 1B weist die Form einer Glocke auf und umfasst einen Tüllenmantel 132, der die aus dem Leitungsmantel 190 herausgeführten elektrischen Leiter 191, 192 umschliesst. Auf der der Rückseite des Gehäuses 11 zugewandten Seite ist der Tüllenmantel 132 mit einem Dichtungskragen 131 verbunden, der den Leitungsmantel 190 der elektrischen Leitung 19 dicht abschliessend umschliesst. Auf der der Frontseite des Gehäuses 11 zugewandten Seite ist der Tüllenmantel 132 mit einem Verbindungskragen 139 verbunden, der nach der Montage die Anschlusshülse 1690 des zugehörigen ersten oder zweiten Kontaktkragens 16A, 16B dicht abschliessend umschliesst. Durch die Tülle 13 werden die elektrischen Leiter 191, 192 daher dicht eingeschlossen und gegen eindringendes Wasser geschützt. Die rückseitig an den Leitungsmantel 190 und frontseitig an die Anschlusshülse 1690 angepasste Tülle 13 bildet faktisch eine Verlängerung des Leitungsmantels 190 und bildet dadurch eine durchgehende Isolationsschicht. Auf aufwändigere Massnahmen zur Abdichtung der Steckverbinder 1A, 1B kann daher verzichtet werden.

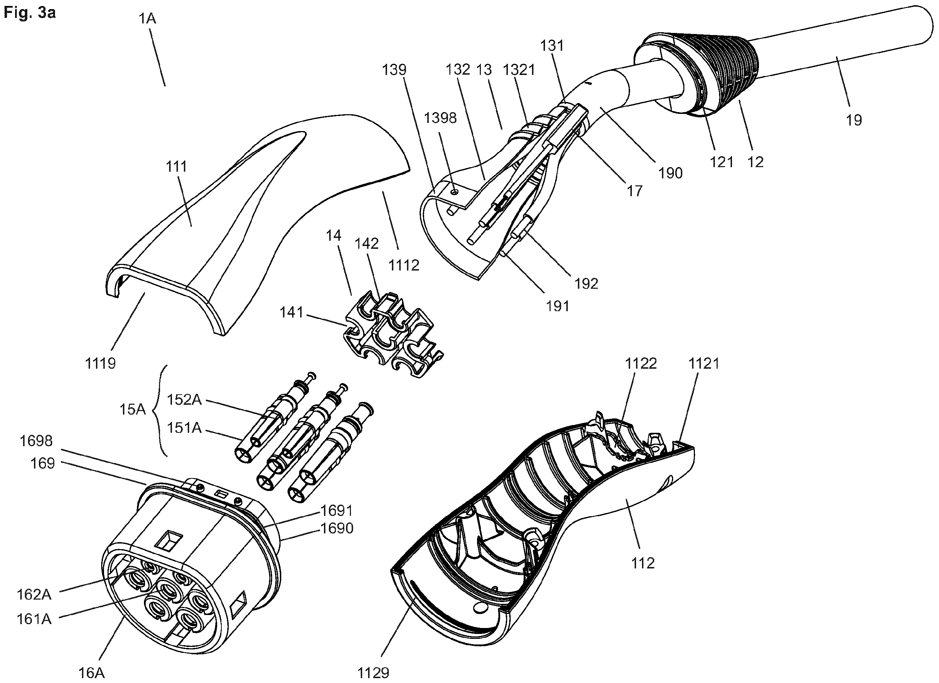

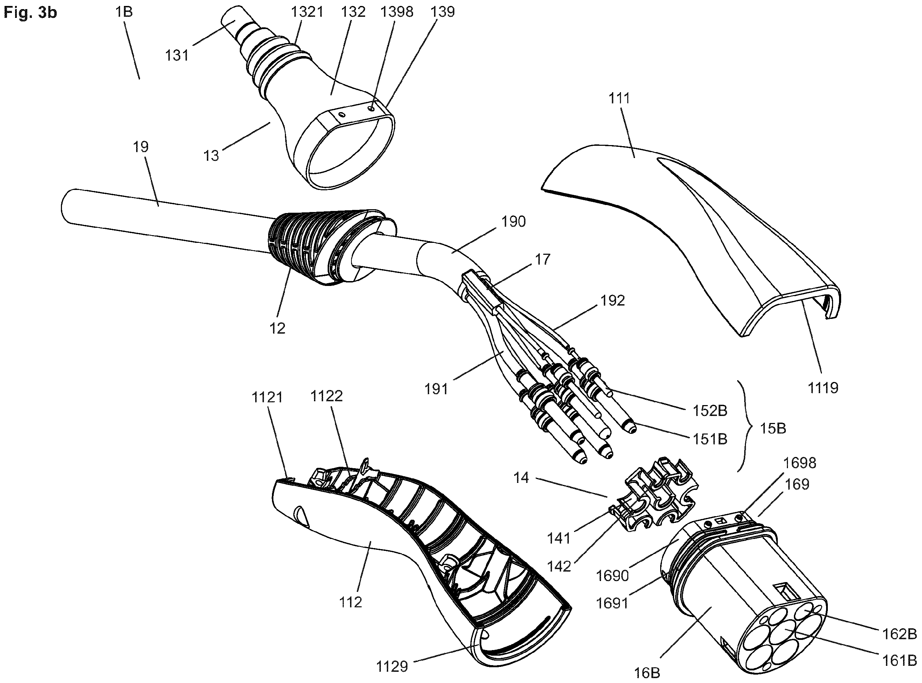

Fig. 3a zeigt den als Steckerkupplung ausgebildeten ersten Steckverbinder 1A von Fig. 1a in Explosionsdarstellung. Die glockenförmige Tülle 13 ist in einem Längsschnitt gezeigt. Fig. 3b zeigt den als Stecker ausgebildeten zweiten Steckverbinder 1B von Fig. 1a in Explosionsdarstellung. Die glockenförmige Tülle 13 ist vollständig gezeigt. Nachstehend werden die identischen Teile der beiden Steckverbinder 1A, 1B ergänzend beschrieben.

Die Tülle 13 umfasst einen Tüllenmantel 132 an den an der Rückseite der Dichtungskragen 131 und an der Frontseite der Verbindungskragen 139 anschliesst. Der Tüllenmantel 132 weist anschliessend an den Dichtungskragen 131 eine Wellenform bzw. einen dehnbaren Mantelbalg 1321 auf. Der Mantelbalg 1321 erlaubt es, die Tülle 13 zu dehnen und an die Länge des in das Gehäuse 11 hineingeführten Leitungsmantels 190 anzupassen.

Der Verbindungskragen 139 der Tülle 13 ist mit Kopplungsöffnungen 1398 versehen, in die Kopplungsnocken 1698, die an der Anschlusshülse 1690 des Kontaktkragens 16A vorgesehen sind, einführbar sind. Mittels der Kopplungsnocken 1698 wird der Verbindungskragen 139 der Tülle 13, der die Anschlusshülse 1690 dicht abschliessend umschliesst, in Position gehalten.

An der Aussenseite der Anschlusshülse 1690 ist eine umlaufende Kopplungsrippe 1691 vorgesehen, die nach dem Zusammenfügen der beiden Gehäuseschalen 111, 112 in frontseitig an den Gehäuseschalen 111, 112 vorgesehene Kopplungsteile 1119, 1129 bzw. in eine durch die Kopplungsteile 1119, 1129 gebildete Kopplungsnut eingreift, wodurch eine formschlüssige Verbindung zwischen dem Gehäuse 11 und dem zugehörigen Kontaktkragen 16A, 16B resultiert. Beim Zusammenfügen der Gehäuseschalen 111, 112 werden die Kopplungsteile 1119, 1129 zudem an den Verbindungskragen 139 der Tülle 13 angedrückt, der an der Aussenseite der Anschlusshülse 169 anliegt, wodurch die Tülle 13 frontseitig dicht abgeschlossen wird.

Weiterhin ist gezeigt (siehe auch Fig. 5a und Fig. 5b), dass an den Gehäuseschalen 111, 112 Klemmelemente 1112, 1122 einstückig angeformt sind, zwischen denen die elektrische Leitung 19 innerhalb des Gehäuses 11 festgeklemmt und fixiert werden kann.

Fig. 4a zeigt das Gehäuse 11 von Fig. 3a oder Fig. 3b sowie den Kupplungskragen 16A von Fig. 3a und den Steckerkragen 16B von Fig. 3b von der Seite.

Fig. 4b zeigt das Gehäuse 11 von Fig. 3a oder Fig. 3b sowie den Kupplungskragen 16A von Fig. 3a und den Steckerkragen 16B von Fig. 3b in räumlicher Darstellung.

Fig. 4c zeigt das Gehäuse 11 von Fig. 3a oder Fig. 3b sowie den Kupplungskragen 16A von Fig. 3a und den Steckerkragen 16B von Fig. 3b von der Frontseite.

Durch das Zusammenfügen der beiden Gehäuseschalen 111, 112 wird das Gehäuse 11 gebildet, das frontseitig das Gehäuseanschlussteil 119 mit den Kopplungsteilen 1119, 1129 und der Aufnahmeöffnung 110 aufweist. In der Aufnahmeöffnung 110 ist nach dem Zusammenfügen der beiden Gehäuseschalen 111, 112 das Kragenanschlussteil 169 des zugeordneten Kontaktkragens 16A, 16B gehalten. In den Figuren 4a, 4b und 4c ist gezeigt, dass die Kragenanschlussteile 169 identisch ausgebildet sind und somit identische Anschlusshülsen 1690, identische Kopplungsteile bzw. Kopplungsrippen 1691 und identische Kopplungsnocken 1698 aufweisen.

Fig. 5a zeigt den ersten Steckverbinder 1A von Fig. 1a in einem Längsschnitt. Fig. 5b zeigt den zweiten Steckverbinder 1B von Fig. 1a in einem Längsschnitt. Die Knickschutzelemente 12 sind in einem Viertelschnitt gezeigt. Nachstehend werden die identischen Teile der beiden Steckverbinder 1A, 1B ergänzend beschrieben.

Es ist gezeigt, dass die Tülle 13 mit dem Dichtungskragen 131 den Leitungsmantel 190 umschliesst und mit dem Verbindungskragen 139 die Anschlusshülse 1690 überlappt. Der Verbindungskragen 139 wird durch die Kopplungsteile 1691 des Gehäuses 11 dicht abschliessend gegen die Anschlusshülse 1690 gedrückt.

Der Tüllenmantel 132 weist anschliessend an den Dichtungskragen 131 eine Wellenform bzw. einen dehnbaren Mantelbalg 1321 auf. Der Mantelbalg 1321 erlaubt es, die Tülle 13 zu dehnen und an die Länge der in das Gehäuse 11 hineingeführten und ummantelten elektrischen Leitung 19 anzupassen. Die Tülle 13 lässt sich daher leicht montieren und schliesst die aus dem Leitungsmantel 190 herausgeführten elektrischen Leiter 191, 192 und die in der Halteplatte 14 gehaltenen Anschlusskontakte 15A dicht ein. Weitere Dichtungsmassnahmen, wie das Vergiessen der elektrischen Leiter 191, 192 und der Anschlusskontakte 15A ist daher nicht notwendig. Änderungen der Konfiguration der Steckverbinder 1A, 1B können daher auch zu einem späteren Zeitpunkt leicht vollzogen werden. Sofern beispielsweise ein anderes Messelement 17 montiert werden soll oder Leitungsanschlüsse geändert werden sollen, kann die Tülle 13 wieder gelöst werden, um die erforderlichen Arbeiten auszuführen.

### Bezugszeichenliste

- 10: Ladekabel
- 1A: erster Steckverbinder, Steckerkupplung
- 1B: zweite Steckverbinder, Stecker
- 11: Gehäuse
- 110: Aufnahmeöffnung
- 111: erste Gehäuseschale
- 1111: Halteteil
- 1112: erstes Klemmelement
- 1119: Kopplungsteil, Kopplungsnut
- 112: zweite Gehäuseschale
- 1120: Montageöffnungen
- 1121: Halteteil
- 1122: zweites Klemmelement
- 1129: Kopplungsteil, Kopplungsnut
- 119: Gehäuseanschlussteil
- 12: Knickschutzelement
- 121: Verbindungsteil
- 13: Tülle
- 131: Dichtungskragen
- 132: Tüllenmantel
- 1321: Mantelbalg
- 139: Verbindungskragen
- 1398: Kopplungsöffnung
- 14: Halteplatte
- 141: erste Haltekragen
- 142: zweite Haltekragen
- 15A: erste Anschlusskontakte, Kupplungskontakte
- 15B: zweite Anschlusskontakte, Steckerkontakte
- 151A: erste Kupplungskontakte
- 152B: erste Steckerkontakte
- 152A: zweite Kopplungskontakte
- 152B: zweite Steckerkontakte
- 16A: erster Kontaktkragen, Kupplungskragen
- 16B: zweite Kontaktkragen, Steckerkragen
- 161A: erste Kupplungskanäle
- 161B: zweite Kupplungskanäle
- 162A: erste Steckerkanäle
- 162B: zweite Steckerkanäle
- 169: Kragenanschlussteil
- 1690: Anschlusshülse
- 1691: Kopplungsteil, Kopplungsrippe
- 1698: Kopplungsnocken
- 17: Messelement, Messwiderstand
- 18: Abdeckkappe
- 181: erste Abdeckzylinder
- 182: zweite Abdeckzylinder
- 183: Verbindungsschleife
- 19: elektrische Leitung
- 190: Leitungsmantel
- 191, 192, 193: isolierte elektrische Leiter

## Patentansprüche

1. Ladekabel (10) mit einer elektrischen Leitung (19), die mehrere von einem Leitungsmantel (190) umschlossene elektrische Leiter (191, 192) aufweist, die an einem Ende mit ersten Anschlusskontakten (15A) eines ersten Steckverbinders (1A) und am anderen Ende mit zweiten Anschlusskontakten (15B) eines zweiten Steckverbinders (1B) verbunden sind, wobei der erste Steckverbinder (1A) ein Gehäuse (11) und einen von diesem Gehäuse (11) gehaltenen ersten Kontaktkragen (16A), in dem die ersten Anschlusskontakte (15A) gelagert sind, umfasst und der zweite Steckverbinder (1B) ein Gehäuse (11) und einen von diesem Gehäuse (11) gehaltenen zweiten Kontaktkragen (16B), in dem die zweiten Anschlusskontakte (15B) gelagert sind, umfasst, **dadurch gekennzeichnet, dass** das Gehäuse (11) des ersten Steckverbinders (1A) und das Gehäuse (11) des zweiten Steckverbinders (1B) identisch ausgebildet sind und eine erste Gehäuseschale (111) und eine zweite Gehäuseschale (112) aufweisen, die miteinander verbunden sind und zusammen ein Gehäuseanschlussteil (119) mit einer Aufnahmeöffnung (110) bilden, und dass der erste und der zweite Kontaktkragen (16A, 16B) je ein Kragenanschlussteil (169) aufweisen, das vom Gehäuseanschlussteil (119) des zugehörigen Gehäuses (11) in der Aufnahmeöffnung (110)gehalten.

2. Ladekabel (10) nach Anspruch 1, **dadurch gekennzeichnet, dass** das Kragenanschlussteil (169) des ersten Kontaktkragens (16A) und das Kragenanschlussteil (169) des zweiten Kontaktkragens (16B) identisch ausgebildet sind.

3. Ladekabel (10) nach Anspruch 1 oder 2, **dadurch gekennzeichnet, dass** das Kragenanschlussteil (169) des ersten und des zweiten Kontaktkragens (16B) umfasst eine Anschlusshülse (1690), die in die Aufnahmeöffnung (110) des Gehäuseanschlussteils (119) hineingeführt ist und die an der Aussenseite wenigstens ein Kopplungsteil (1691), wie einer Kopplungsrippe oder einer Kopplungsnut, aufweist, die nach dem Verbinden der ersten und zweiten Gehäuseschale (111, 112) mit einem Kopplungsteil (1119, 1129) des Gehäuseanschlussteils (119), wie einer Kopplungsnut oder einer Kopplungsrippe, formschlüssig zusammenwirkt.

4. Ladekabel (10) nach Anspruch 1, 2 oder 3, **dadurch gekennzeichnet, dass** der erste Steckverbinder (1A) und der zweite Steckverbinder (1B) je ein Knickschutzelement (12) aufweisen, die identisch ausgebildet sind und die je an dem dem Gehäuseanschlussteil (119) gegenüber liegenden Ende des zugehörigen Gehäuses (11) von Halteteilen (1111, 1121) des Gehäuses (11) gehalten sind, die mit einem Verbindungsteil (121) des Knickschutzelements (12) formschlüssig zusammenwirken.

5. Ladekabel (10) nach einem der Ansprüche 1 - 4, **dadurch gekennzeichnet, dass** der erste Steckverbinder (1A) und der zweite Steckverbinder (1B) je eine vorzugsweise aus Kunststoff gefertigte Tülle (13) aufweisen, die identisch ausgebildet sind.

6. Ladekabel (10) nach Anspruch 5, **dadurch gekennzeichnet, dass** die Tülle (13) die Form einer Glocke mit einem Tüllenmantel (132) aufweist, der die aus dem Leitungsmantel (190) herausgeführten elektrischen Leiter (191, 192) umschliesst und an den auf einer Seite ein Dichtungskragen (131) anschliesst, der den Leitungsmantel (190) vorzugsweise dicht abschliessend umschliesst, und an den auf der anderen Seite ein Verbindungskragen (139) der Tülle (13) anschliesst, der die Anschlusshülse (1690) des zugehörigen ersten oder zweiten Kontaktkragens (16A, 16B) vorzugsweise dicht abschliessend umschliesst.

7. Ladekabel (10) nach Anspruch 6, **dadurch gekennzeichnet, dass** die Anschlusshülse (1690) des zugehörigen ersten oder zweiten Kontaktkragens (16A, 16B) und der Verbindungskragen (139) der Tülle (13) durch Kopplungselemente (1698, 1398), wie Kopplungsnocken (1698) und Kopplungsöffnungen (1398) miteinander gekoppelt sind.

8. Ladekabel (10) nach Anspruch 6 oder 7, **dadurch gekennzeichnet, dass** der Verbindungskragen (139) Tülle (13) durch die Kopplungsteile (1119, 1129) des Gehäuses (11) dicht abschliessend gegen die Anschlusshülse (1690) des zugehörigen ersten oder zweiten Kontaktkragens (16A, 16B) gedrückt wird.

9. Ladekabel (10) nach einem der Ansprüche 1 - 8, **dadurch gekennzeichnet, dass** der erste Steckverbinder (1A) und der zweite Steckverbinder (1B) je eine vorzugsweise aus Kunststoff gefertigte Halteplatte (14) aufweisen, die identisch ausgebildet sind und Haltekragen (141, 142) aufweisen, in die je einer der ersten oder zweiten Anschlusskontakte (15A; 15B) eingesetzt ist.

10. Ladekabel (10) nach einem der Ansprüche 1 - 9, **dadurch gekennzeichnet, dass** zwei der ersten Anschlusskontakte (151A; 152A) des ersten Steckverbinders (1A) und/oder dass zwei der zweiten Anschlusskontakte (151B; 152B) des ersten Steckverbinders (1B) mit einem der Temperaturmessung dienenden Messfühler (17), wie einem Messwiderstand, verbunden sind, wobei nur einer der Anschlusskontakte (151A, 151B) mit einem der elektrischen Leiter (191, 192) verbunden ist.

11. Ladekabel (10) nach einem der Ansprüche 1 - 10, **dadurch gekennzeichnet, dass** wenigstens zwei der Anschlusskontakte (151A, 152A; 151B, 152B) der Führung eines Ladestroms dienende Leistungskontakte (151A, 151B) sind und wenigstens einer der Anschlusskontakte (151A, 152A; 151B, 152B) ein Messkontakt (152A, 152B) ist und/oder dass die elektrischen Leiter (191, 192) zur Führung des Ladestroms vorgesehene elektrische Leiter (191) und wenigstens eine Messleitung oder Steuerleitung (192) umfassen.

12. Ladekabel (10) nach einem der Ansprüche 1 - 11, **dadurch gekennzeichnet, dass** die beiden Gehäuseschalen (111, 112) durch Schrauben (115) oder durch Rastelemente miteinander verbunden sind.

13. Ladekabel (10) nach einem der Ansprüche 1 - 12, **dadurch gekennzeichnet, dass** die beiden Gehäuseschalen (111, 112) je einstückig mit einem Klemmelement (1112, 1122) verbunden sind.

14. Ladekabel (10) nach einem der Ansprüche 1 - 13, **dadurch gekennzeichnet, dass** der erste Steckverbinder (1A) und/oder der zweite Steckverbinder (1B) durch eine Abdeckkappe (18) abgedeckt ist, die durch eine Verbindungsschleife (183) mit der elektrischen Leitung (19) verbunden ist.

15. Ladekabel (10) nach einem der Ansprüche 1 - 14, **dadurch gekennzeichnet, dass** der erste Steckverbinder (1A) als Steckerkupplung oder Stecker ausgebildet ist und dass der zweite Steckverbinder (1B) als Stecker oder Steckerkupplung ausgebildet ist.
